# EUROPÄISCHE PATENTSCHRIFT

(11) **EP 0 867 349 B1**
(45) Veröffentlichungstag und Bekanntmachung des Hinweises auf die Patenterteilung: **12.06.2002**
(21) Anmeldenummer: 98103585.0
(22) Anmeldetag: 02.03.1998
(51) Int. Cl.: B60T 7/12, B60T 7/04, B60K 31/00

(54) **Bremsregelungsanlage für Kraftfahrzeuge mit einer ein- und ausschaltbaren elektronischen Geschwindigkeitsregeleinheit**
Brake control system for motor vehicles with a connectable and disconnectable electronic speed control unit
Système de commande de freinage pour véhicules automobiles muni d'une unité électronique de commande de vitesse commutable

(30) Priorität: 27.03.1997 DE 19712857
(43) Veröffentlichungstag der Anmeldung: 30.09.1998
(73) Patentinhaber: Bayerische Motoren Werke Aktiengesellschaft, 80788 München (DE)
(72) Erfinder: Toelge, Thomas, 80993 München (DE); Schoelzel, Mathias, 81667 München (DE)

(56) Entgegenhaltungen:
- EP-A- 0 484 995
- WO-A-96/40534
- DE-A- 4 123 110
- GB-A- 2 309 555

## Beschreibung

Die Erfindung betrifft eine Bremsregelungsanlage für Kraftfahrzeuge mit einer ein- und ausschaltbaren elektronischen Geschwindigkeitsregeleinheit nach dem Oberbegriff der Patentansprüche 1 bis 3.

Aus der EP 0 484 995 A2 ist beispielsweise eine elektronische Geschwindigkeitsregeleinheit für Kraftfahrzeuge bekannt, die in Abhängigkeit von einem einstellbaren gewünschten Abstand zum vorausfahrenden Fahrzeug eine entsprechende Fahrzeuggeschwindigkeit bzw. Fahrzeugverzögerung vorgibt. Bei dieser bekannten Geschwindigkeitsregeleinheit ist die vorgegebene Fahrzeuggeschwindigkeit bzw. Fahrzeugverzögerung mittels eines automatischen Bremseingriffes durch die Bremsregelungsanlage des Kraftfahrzeuges einstellbar. Bei dieser Geschwindigkeitsregeleinheit ist nicht bekannt, wie vom eingeschalteten in den ausgeschalteten Zustand übergegangen wird.

Aus der DE 43 38 098 A1 ist eine Geschwindigkeitsregeleinheit bekannt, die eine vom Fahrer manuell vorgegebene Fahrzeuggeschwindigkeit unabhängig von der Betätigung des Gaspedals konstant hält. Eine Regelung durch einen automatischen Bremseingriff ist hieraus jedoch nicht bekannt. Diese bekannte Geschwindigkeitsregeleinheit wird bei Betätigung des Bremspedals vom eingeschalteten Zustand in den ausgeschalteten Zustand übergeführt.

Aus der gattungsgemäßen DE 44 27 246 C2 ist eine Bremsregelungsanlage bekannt, durch die allgemein ein automatischer Bremseingriff möglich ist. Eine derartige Bremsregelungsanlage ist mit steuerbaren Komponenten, insbesondere Ventilen und Pumpen, ausgestattet, die in den Leitungen zur Förderung des Brems-Druckmittels angebracht sind. Durch eine derartige Bremsregelungsanlage sind im Falle eines automatischen Bremseingriffs, beispielsweise durch eine Geschwindigkeitsregeleinheit, beliebige vorgegebene Druckwerte in den Radbremszylindern unabhängig von der Betätigung des Bremspedals einstellbar.

Bei bekannten Bremsregelungsanlage mit einer elektronischen Geschwindigkeitsregeleinheit, die eine vorgegebene Fahrzeuggeschwindigkeit mittels eines automatischen Bremseingriffs einstellt, wird üblicherweise beim Übergang der Geschwindigkeitsregeleinheit vom eingeschalteten in den ausgeschalteten Zustand der automatische Bremseingriff ebenfalls beendet. Daraus folgt, daß der durch den automatischen Bremseingriff zuletzt in den Radbremszylindern vorherrschende Ist-Druck zunächst ruckartig abgebaut wird, bis der Druck in den Radbremszylindern allein aufgrund des durch die Betätigung des Bremspedals geförderten Druckmittelvolumens den Ist-Druck in den Radbremszylindern wieder ansteigen läßt. Dieser ruckartige Druckeinbruch in den Radbremszylindern führt zu einer spürbaren Verringerung der Fahrzeugverzögerung, obwohl der Fahrer durch die Betätigung des Bremspedals anzeigt, daß eine höhere Verzögerung erzielt werden soll. Herkömmliche Geschwindigkeitsregeleinheiten mit Bremseingriff erreichen etwa nur 20% der möglichen Verzögerung während des automatischen Bremseingriffes, so daß zwangsweise bei einer gewünschten höheren Verzögerung die Betätigung des Bremspedals notwendig ist.

Es ist Aufgabe der Erfindung, bei Betätigung des Bremspedals während eines automatischen Bremseingriffs durch eine eingeschaltete Geschwindigkeitsregeleinheit einen Einbruch in der Fahrzeugverzögerung zu verhindern.

Diese Aufgabe wird durch die kennzeichnenden Merkmale der Patentansprüche 1 bis 3 gelöst.

Erfindungsgemäß wird von einer Bremsregelungsanlage für Kraftfahrzeuge mit einer ein- und ausschaltbaren elektronischen Geschwindigkeitsregeleinheit, durch die bei eingeschalteter Geschwindigkeitsregeleinheit eine vorgegebene Fahrzeuggeschwindigkeit mittels eines automatischen Bremseingriffs einstellbar ist, mit einem durch den Fahrer betätigbaren Bremspedal und mit steuerbaren Bremskreis-Komponenten, durch die im Falle eines automatischen Bremseingriffs vorgegebene Druckwerte in den Radbremszylindern unabhängig von der Betätigung des Bremspedals eingestellt werden, ausgegangen.

In einer ersten erfindungsgemäßen Lösung wird die eingeschaltete Geschwindigkeitsregeleinheit bei Beginn der Betätigung des Bremspedals ausgeschaltet, und anschließend der automatische Bremseingriff derart vorgenommen, daß in den Radbremszylindern der durch die Geschwindigkeitsregeleinheit zuletzt eingestellte Ist-Druck beibehalten wird, bis der über die Betätigung des Bremspedals angeforderte Soll-Druck den durch die Geschwindigkeitsregeleinheit in den Radbremszylindern zuletzt eingestellten Ist-Druck zumindest erreicht oder überschritten hat.

In einer zweiten erfindungsgemäßen Lösung wird die eingeschaltete Geschwindigkeitsregeleinheit bei Beginn der Betätigung des Bremspedals ausgeschaltet, und anschließend der automatische Bremseingriff derart vorgenommen, daß der in den Radbremszylindern eingestellte Ist-Druck ausgehend von dem durch die Geschwindigkeitsregeleinheit in den Radbremszylindern zuletzt eingestellten Ist-Druck kontinuierlich dem über die Betätigung des Bremspedals angeforderten Soll-Druck angeglichen wird, bis der in den Radbremszylindern eingestellte Ist-Druck in etwa dem über die Betätigung des Bremspedals angeforderten Soll-Druck entspricht.

In einer dritten erfindungsgemäßen Lösung wird die eingeschaltete Geschwindigkeitsregeleinheit bei Beginn der Betätigung des Bremspedals ausgeschaltet, und anschließend der automatische Bremseingriff derart vorgenommen, daß der in den Radbremszylindern eingestellte Ist-Druck auf einen Gesamtdruckwert angehoben wird, der der Summe des durch die Geschwindigkeitsregeleinheit in den Radbremszylindern zuletzt eingestellten Ist-Druckes und des über die Betätigung des Bremspedals angeforderten Soll-Druckes entspricht. Vorzugsweise wird nach Erreichen eines definierten maximalen Gesamtdruckwertes der automatische Bremseingriff derart vorgenommen, daß dieser Gesamtdruckwert in den Radbremszylindern auf den über die Betätigung des Bremspedals angeforderten Soll-Druck abgesenkt wird.

Durch alle drei Lösungen wird ein Druckeinbruch in den Radbremszylindern bzw. ein Verzögerungseinbruch im Gegensatz zum Stand der Technik, bei dem bereits bei Beginn der Betätigung des Bremspedals die eingeschaltete Geschwindigkeitsregeleinheit und der automatische Bremseingriff ausgeschaltet werden, verhindert.

Üblicherweise besteht bei Bremsvorgängen ohne automatischem Bremseingriff eine direkte Zuordnung zwischen der Betätigung des Bremspedals bzw. dem dadurch angeforderten Soll-Druck und dem in den Radbremszylindern eingestellten Ist- Druck, durch den der Fahrer eine bestimmte Verzögerung erwartet. Bei einem automatischen Bremseingriff ist jedoch diese direkte Zuordnung unterbrochen, da der in den Radbremszylindern eingestellte Ist-Druck durch einen eigenen von dem Bremspedal entkoppelten Regelkreis eingestellt wird. Die Erfindung betrifft den Übergang zwischen einem automatischen Bremseingriff mit einem vom Bremspedal entkoppelten Regelkreis zu einem Bremsvorgang ohne automatischen Bremseingriff, bei dem die direkte Beziehung zwischen dem über die Betätigung des Bremspedals angeforderten Solldruck und dem daraus resultierenden Ist-Druck in den Radbremszylindern wieder hergestellt ist.

In der Zeichnung sind Ausführungsbeispiele der Erfindung dargestellt. Es zeigt:
- Fig. 1: schematisch mögliche Komponenten der erfindungsgemäßen Bremsregelungsanlage.
- Fig. 2: Druckverläufe über der Zeit mit einer erfindungsgemäßen Bremsregelungsanlage nach Patentanspruch 1,
- Fig. 3: Druckverläufe über der Zeit mit einer erfindungsgemäßen Bremsregelungsanlage nach Patentanspruch 2 und
- Fig. 4: Druckverläufe über der Zeit mit einer erfindungsgemäßen Bremsregelungsanlage nach Patentanspruch 3.

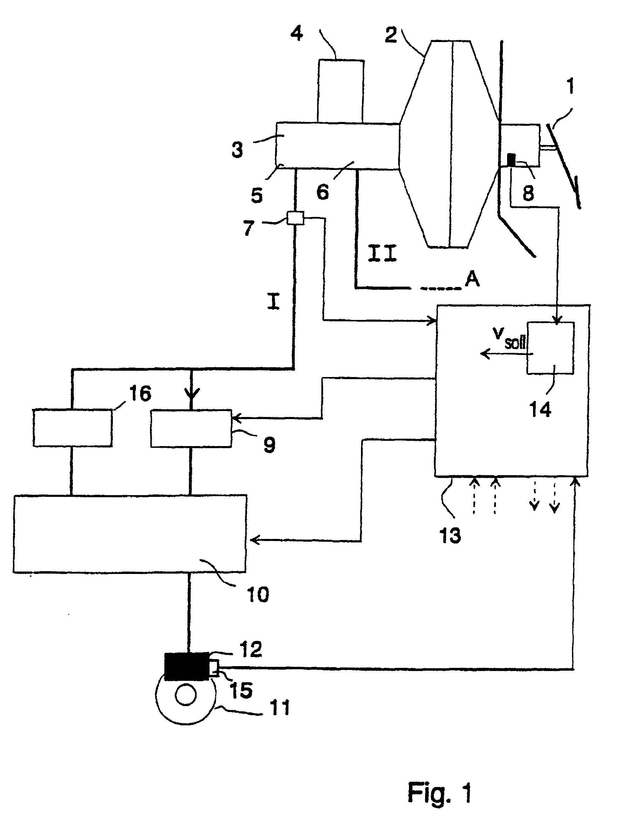

In Fig. 1 ist ein Bremspedal 1 mit einem Bremskraftverstärker 2 verbunden. Am Bremskraftverstärker 2 schließt ein Hauptbremszylinder 3, vorzugsweise ein Tandem-Hauptbremszylinder, an. Der Hauptbremszylinder 3 ist mit einem Bremsflüssigkeitsausgleichsbehälter 4 verbunden. Der Hauptbremszylinder 3 weist zwei Druckausgänge 5 und 6 auf. Der Druckausgang 6 ist beispielsweise einem mit A angedeuteten, jedoch nicht konkret dargestellten Vorderachs-Bremskreis II zugeordnet. Der Druckausgang 5 des Hauptbremszylinders 3 ist mit einem Hinterachsbremskreis I verbunden.

Vom Druckausgang 5 führt eine hydraulische Druckmittel-Leitung zu steuerbaren Bremskreis-Komponenten, insbesondere zu einem Umschaltventil 9, zu einem Ladeventil 16 und zu einem vom Bremskreis entkoppelten Regelkreis 10. Der Regelkreis 10 weist üblicherweise ein zwischen dem Umschaltventil 9 und dem Radbremszylinder 12 eines Rades 11 angeordnetes Einlaßventil, ein mit dem Radbremszylinder 12 verbundenes Auslaßventil und eine zwischen dem Auslaßventil und dem Umschaltventil angeordnete Rückförderpumpe auf. Die steuerbaren Bremskreis-Komponenten 9, 16 und 10 sind vorzugsweise die Komponenten einer üblichen Fahrzeuggeschwindigkeitsregelung mit Bremseingriff.

Die Bremsregelungsanlage weist weiterhin ein elektronisches Steuergerät 13 mit einer Geschwindigkeitsregeleinheit 14 auf, durch die im eingeschalteten Zustand eine vorgegebene Fahrzeuggeschwindigkeit Vₛₒₗₗ mittels eines automatischen Bremseingriffs über die Ansteuerung der steuerbaren Bremskreis-Komponenten 9, 16 und 10 einstellbar ist. Die Ausgänge des elektronischen Steuergeräts 13 sind über elektrische Steuerleitungen mit den steuerbaren Bremskreis-Komponenten 9, 16 und 10 verbunden. In Fig. 1 sind schematisch nur die funktionell wichtigsten Komponenten der erfindungsgemäßen Bremsregelungsanlage dargestellt. Ergänzend wird für eine mögliche detailliertere Anordnung der hydraulischen Komponenten einer Bremsregelungsanlage und für deren Funktionsweise, die nicht Gegenstand der erfindungsgemäßen Bremsregelungsanlage sind, auf Fig. 1 der DE 44 27 246 C2 verwiesen.

Im folgenden wird der über die Betätigung des Bremspedals angeforderte Soll-Druck mit dem Begriff Fahrerdruck p_{F} und der in den Radbremszylindern jeweils eingestellte Ist-Druck mit dem Begriff Systemdruck pₛ abgekürzt.

Das Steuergerät 13 erhält als Eingangssignale das Signal eines Bremslichtschalters 8 zur Erfassung des Beginns der Betätigung des Bremspedals 1 (zum Zeitpunkt t₀), das Signal eines Drucksensors 7 zur Erfassung des Fahrerdrucks p_{F} (ab dem Zeitpunkt t₂) und das Signal eines Radsensors 15 zur Erfassung des Systemdrucks p_{S}. Alternativ kann über die ABS-Drehzahlsensoren die Fahrzeugverzögerung und daraus rechnerisch der Systemdruck im Rad ermittelt werden.

Im Normalbetrieb, d. h. ohne automatischen Bremseingriff, sind das Umschaltventil 9, das Ladeventil 16 und der Regelkreis 10 derart geschaltet, daß über Druckmittel-Leitungen eine direkte Verbindung zwischen dem Druckausgang 5 und dem Radbremszylinder 12 besteht und damit der Systemdruck p_{S} im Radbremszylinder 12 dem Fahrerdruck p_{F} entspricht.

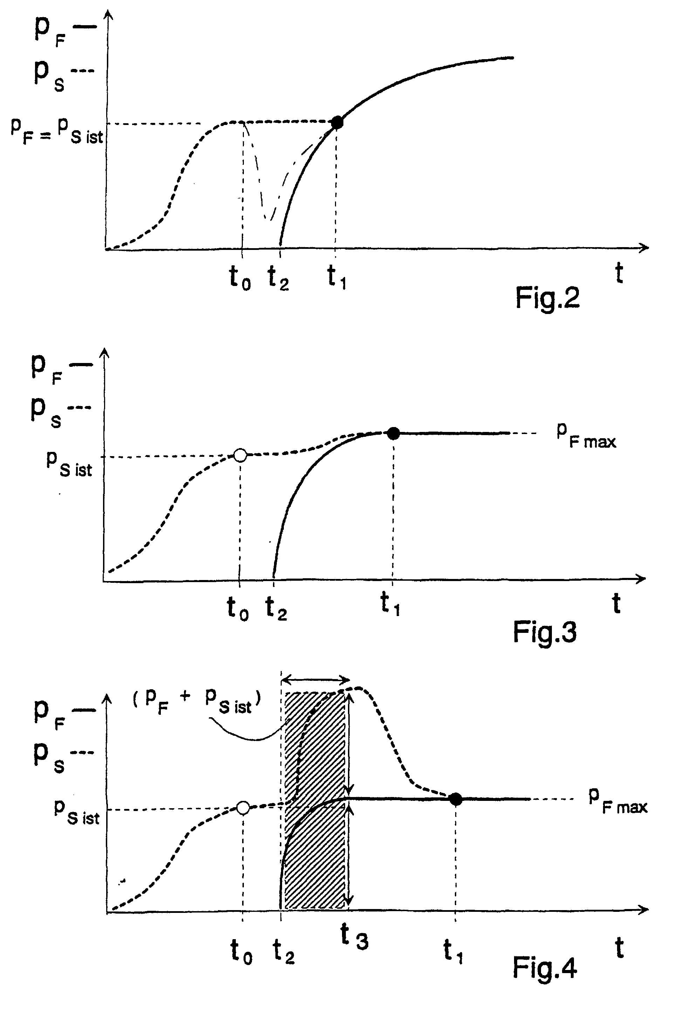

In den Fig. 2 bis 4 sind die Verläufe des Fahrerdrucks p_{F} mit dicken durchgezogenen Linien und die Verläufe des Systemdrucks p_{S} mit dicken gestrichelten Linien dargestellt. Mit dem Zeitpunkt t₀ ist jeweils der Zeitpunkt bezeichnet, bei dem eine Betätigung des Bremspedals 1 beginnt und damit die eingeschaltete Geschwindigkeitsregeleinheit 14 ausgeschaltet wird. Der Zeitpunkt t₁ ist jeweils dem Ausschaltzeitpunkt des automatischen Bremseingriffes zugeordnet, wenn keine Differenz zwischen dem Systemdruck p_{S} und dem Fahrerdruck p_{F} mehr vorliegt. Zum Zeitpunkt t₂, d. h. nach einer kurzen Totzeit seit dem Zeitpunkt t₀, beginnt jeweils der Aufbau des Fahrerdrucks p_{F}.

In Fig. 2 wird ab dem Zeitpunkt t₀ der automatische Bremseingriff zunächst beibehalten, indem die Bremskreis-Komponenten 9, 16 und 10 derart angesteuert werden, daß der in dem jeweiligen Radbremszylinder 12 eines Rades 11 durch die Geschwindigkeitsregeleinheit 14 zuletzt eingestellte Systemdruck p_{s ist} beibehalten wird. Dieser automatische Bremseingriff wird zum Zeitpunkt t₁ ausgeschaltet, wenn der Fahrerdruck p_{F} zumindest den durch die Geschwindigkeitsregeleinheit in den Radbremszylindern zuletzt eingestellten Ist-Druck p_{S ist} erreicht hat.

In Fig. 3 ist eine Alternative der erfindungsgemäßen Bremsregelungsanlage dargestellt. Zwischen den Zeitpunkten t₀ und t₂ bleibt der durch die Geschwindigkeitsregeleinheit in den Radbremszylindern zuletzt eingestellte Systemdruck p_{S ist} zunächst beibehalten. Anschließend wird grundsätzlich der Systemdruck p_{S} kontinuierlich an den Fahrerdruck p_{F} angeglichen, um abrupte Änderungen des Systemdrucks p_{S} zu verhindert. Zum Zeitpunkt t₁ ist der Systemdruck p_{S} gleich dem Fahrerdruck p_{F}, wonach der automatische Bremseingriff ausgeschaltet wird.

Insbesondere wird davon ausgegangen, daß der Fahrer durch die Betätigung des Bremspedals 1 bei eingeschalteter Geschwindigkeitsregelanlage 14 eine verstärkte Fahrzeugverzögerung wünscht, so daß ein Ziel-Fahrerdruck p_{Fmax} angestrebt wird, der größer als der zuletzt durch die Geschwindigkeitsregelanlage 14 eingestellte Systemdruck p_{S ist} ist. Nach dem Zeitpunkt t₂ kann das Steuergerät 13 beispielsweise aufgrund der Steigung des Verlaufs des Fahrerdrucks p_{F} den zu erwartenden Ziel-Fahrerdruck p_{Fmax} schätzen. Vorzugsweise wird der Systemdruck p_{S} in Abhängigkeit von dem erwarteten Ziel-Fahrerdruck p_{Fmax} kontinuierlich auf den Fahrerdruck p_{F} angehoben.

In einer Alternative nach Fig. 4 werden die Bremskreis-Komponenten 9, 16 und 10 mittels des automatischen Bremseingriffs in der Weise angesteuert, daß der Systemdruck p_{S} einen Gesamtdruckwert aus der Summe des Fahrerdrucks p_{F} und des durch die Geschwindigkeitsregeleinheit in den Radbremszylindern 12 zuletzt eingestellten Ist-Drucks p_{Sist} erreicht (schraffierte Fläche). Das Erreichen eines definierten maximalen Gesamtdruckwertes kann unterschiedlich definiert werden:
Beispielsweise kann sich das Erreichen des definierten maximalen Gesamtdruckwertes auf eine bestimmte Zeitspanne oder auf das Erreichen eines bestimmten Fahrerdrucks p_{F} beziehen, insbesondere auf das Erreichen des Ziel-Fahrerdrucks p_{Fmax} wie im Beispiel nach Fig. 4.

Grundsätzlich gleicht sich der Systemdruck p_{S} dem Fahrerdruck p_{F} nach einer bestimmten Zeit oder wenn der Fahrerdruck p_{F} nicht weiter erhöht wird (z.B. p_{F}=p_{Fmax}), an.

In Fig. 4 wird der Gesamtdruckwert p_{F} + p_{Sist} ab dem Zeitpunkt t₂ bis zum Erreichen des Ziel-Fahrerdrucks p_{Fmax} gebildet (schraffierte Fläche) und als Systemdruck p_{S} eingestellt. Das Erreichen des Ziel-Fahrerdruck p_{Fmax} wird beispielsweise vom Steuergerät 13 dadurch festgestellt, daß der steigende Verlauf des Fahrerdrucks p_{F} zumindest für eine vorgegebene Zeit in einen konstanten Verlauf übergegangen ist. Ist der definierte maximale Gesamtdruckwert, hier p_{Fmax} + p_{Sist}, zum Zeitpunkt t₃ erreicht, wird der Systemdruck p_{S} langsam auf den Fahrerdruck p_{F}, im vorliegenden Fall auf den Ziel-Fahrerdruck p_{Fmax}, abgesenkt. Sind zum Zeitpunkt t₁ der Systemdruck p_{S} und der Fahrerdruck p_{F} in etwa gleich, wird der automatische Bremseingriff ausgeschaltet.

Durch die erfindungsgemäße Bremsregelungsanlage sind im Hinblick auf die Fahrzeugverzögerung ruckfreie Übergänge von einem eingeschalteten Zustand in einen ausgeschalteten Zustand der Geschwindigkeitsregeleinheit möglich. Weiterhin wird nicht nur der Komfort sondern auch die Sicherheit von Bremsregelungsanlagen erhöht, da eine gewünschte stärkere Fahrzeugverzögerung schnellstmöglich vorgenommen wird.

In Fig. 2 ist durch den Verlauf der dünnen strichpunktierten Linie der Verlauf des Systemdrucks mit Bremsregelungsanlagen nach dem Stand der Technik dargestellt, der einen starken Einbruch erleidet und damit einen Einbruch der Fahrzeugverzögerung verursacht. Dieser Nachteil des Standes der Technik wird durch sämtliche Alternativen der erfindungsgemäßen Bremsregelungsanlage verhindert.

## Patentansprüche

1. Bremsregelungsanlage für Kraftfahrzeuge mit einer ein- und ausschaltbaren elektronischen Geschwindigkeitsregeleinheit (14), durch die bei eingeschalteter Geschwindigkeitsregeleinheit (14) eine vorgegebene Fahrzeuggeschwindigkeit mittels eines automatischen Bremseingriffs einstellbar ist, mit einem durch den Fahrer betätigbaren Bremspedal (1) und mit steuerbaren Bremskreis-Komponenten, durch die im Falle eines automatischen (12) Bremseingriffs vorgegebene Druckwerte in den Radbremszylindern (12) unabhängig von der Betätigung des Bremspedals (1) eingestellt werden, **dadurch gekennzeichnet, daß** die eingeschaltete Geschwindigkeitsregeleinheit (14) bei Beginn (t₀) der Betätigung des Bremspedals (1) ausgeschaltet wird, und anschließend der automatische Bremseingriff derart vorgenommen wird, daß in den Radbremszylindern (12) der durch die Geschwindigkeitsregeleinheit (14) zuletzt eingestellte Ist-Druck (p_{S ist}) beibehalten wird, bis der über die Betätigung des Bremspedals (1) angeforderte Soll-Druck (p_{F}) den durch die Geschwindigkeitsregeleinheit (14) in den Radbremszylindern (12) zuletzt eingestellten Ist-Druck (p_{S}) zumindest erreicht oder überschritten hat.

2. Bremsregelungsanlage für Kraftfahrzeuge mit einer ein- und ausschaltbaren elektronischen Geschwindigkeitsregeleinheit (14), durch die bei eingeschalteter Geschwindigkeitsregeleinheit (14) eine vorgegebene Fahrzeuggeschwindigkeit mittels eines automatischen Bremseingriffs einstellbar ist, mit einem durch den Fahrer betätigbaren Bremspedal (1) und mit steuerbaren Bremskreis-Komponenten, durch die im Falle eines automatischen Bremseingriffs vorgegebene Druckwerte in den Radbremszylindern (12) unabhängig von der Betätigung des Bremspedals (1) eingestellt werden, **dadurch gekennzeichnet, daß** die eingeschaltete Geschwindigkeitsregeleinheit (14) bei Beginn (t₀) der Betätigung des Bremspedals (1) ausgeschaltet wird, und anschließend der automatische Bremseingriff derart vorgenommen wird, daß der in den Radbremszylindern (12) eingestellte Ist-Druck (p_{S}) ausgehend von dem durch die Geschwindigkeitsregeleinheit (14) in den Radbremszylindern (12) zuletzt eingestellten Ist-Druck (p_{S ist}) kontinuierlich dem über die Betätigung des Bremspedals (1) angeforderten Soll-Druck (p_{F}) angeglichen wird, bis der in den Radbremszylindern (12) eingestellte Ist-Druck (p_{S}) in etwa dem über die Betätigung des Bremspedals (1) angeforderten Soll-Druck (p_{F}) entspricht.

3. Bremsregelungsanlage für Kraftfahrzeuge mit einer ein- und ausschaltbaren elektronischen Geschwindigkeitsregeleinheit (14), durch die bei eingeschalteter Geschwindigkeitsregeleinheit (14) eine vorgegebene Fahrzeuggeschwindigkeit mittels eines automatischen Bremseingriffs einstellbar ist, mit einem durch den Fahrer betätigbaren Bremspedal (1) und mit steuerbaren Bremskreis-Komponenten, durch die im Falle eines automatischen Bremseingriffs vorgegebene Druckwerte in den Radbremszylindern (12) unabhängig von der Betätigung des Bremspedals (1) eingestellt werden, **dadurch gekennzeichnet, daß** die eingeschaltete Geschwindigkeitsregeleinheit (14) bei Beginn (t₀) der Betätigung des Bremspedals (1) ausgeschaltet wird, und anschließend der automatische Bremseingriff derart vorgenommen wird, daß der in den Radbremszylindern (12) eingestellte Ist-Druck (p_{S}) auf einen Gesamtdruckwert (p_{S ist} + p_{F}) angehoben wird, der der Summe des durch die Geschwindigkeitsregeleinheit (14) in den Radbremszylindern (12) zuletzt eingestellten Ist-Druckes (p_{S ist}) und des über die Betätigung des Bremspedals (1) angeforderten Soll-Druckes (p_{F}) entspricht.

4. Bremsregelungsanlage nach Patentanspruch 3, **dadurch gekennzeichnet, daß** nach Erreichen eines definierten maximalen Gesamtdruckwertes (p_{Sist} + p_{Fmax}) der automatische Bremseingriff derart vorgenommen wird, daß dieser Gesamtdruckwert (p_{S ist} + p_{Fmax}) in den Radbremszylindern (12) auf den über die Betätigung des Bremspedals (1) angeforderten Soll-Druck (p_{F}; p_{Fmax}) abgesenkt wird.

## Claims

1. A brake control system for motor vehicles comprising a connectable and disconnectable electronic speed control unit (14) by means of which a predetermined vehicle speed can be set by automatic brake engagement when the speed control unit (14) is connected, and also comprising a brake pedal (1) actuated by the driver and controllable brake circuit components for setting predetermined pressures in the wheel brake cylinders (12) when the automatic brake engages, irrespective of actuation of the brake pedal (1), **characterised in that** the speed control unit (14) is disconnected when actuation of the brake pedal (1) begins (tₒ) and subsequently the automatic brake is engaged so that the actual pressure (p_{S ist}) last set in the wheel brake cylinders (12) by the speed control unit (14) is maintained until the set pressure (p_{F}) requested by actuating the brake pedal (1) has at least reached or exceeded the actual pressure (p_{S}) last set in the wheel brake cylinders (12) by the speed control unit (14).

2. A brake control system for motor vehicles comprising a connectable and disconnectable electronic speed control unit (14) by means of which a predetermined vehicle speed can be set by automatic brake engagement when the speed control unit (14) is connected, and also comprising a brake pedal (1) actuated by the driver and controllable brake circuit components for setting predetermined pressures in the wheel brake cylinders (12) when the automatic brake engages, irrespective of actuation of the brake pedal (1), **characterised in that** the speed control unit (14) is disconnected when actuation of the brake pedal (1) begins (tₒ) and subsequently the automatic brake is engaged so that the actual pressure (p_{S}) set in the wheel brake cylinders (12), starting from the actual pressure (p_{S ist}) last set in the wheel brake cylinders (12) by the speed control unit (14), is continuously made equal to the set pressure (p_{F}) requested by actuating the brake pedal (1) until the actual pressure (p_{S}) set in the wheel brake cylinders (12) is approximately equal to the set pressure (p_{F}) requested by actuating the brake pedal (1).

3. A brake control system for motor vehicles comprising a connectable and disconnectable electronic speed control unit (14) by means of which a predetermined vehicle speed can be set by automatic brake engagement when the speed control unit (14) is connected, and also comprising a brake pedal (1) actuated by the driver and controllable brake circuit components for setting predetermined pressures in the wheel brake cylinders (12) when the automatic brake engages, irrespective of actuation of the brake pedal (1), **characterised in that** the speed control unit (14) is switched off when actuation of the brake pedal (1) begins (tₒ) and subsequently the automatic brake is engaged so that the actual pressure (p_{S}) set in the wheel brake cylinders (12) is raised to a total pressure (p_{S ist} + p_{F}) equal to the sum of the actual pressure (p_{S ist}) last set in the wheel brake cylinders (12) by the speed control unit (14) and the set pressure (p_{F}) requested by actuating the brake pedal (1).

4. A brake control system according to claim 3, **characterised in that** after a defined maximum total pressure (p_{S ist} + p_{F max}) has been reached, the automatic brake is engaged so that the said total pressure (P_{S ist} + p_{F max}) in the wheel brake cylinders (12) is reduced to the set pressure (p_{F}, p_{F max}) requested by actuating the brake pedal (1).

## Revendications

1. Installation de régulation de freins pour véhicule, comprenant une unité de régulation de vitesse électronique (14) susceptible d'être mise en oeuvre et d'être coupée, qui règle une vitesse prédéterminée du véhicule par une intervention automatique sur les freins, une pédale de frein (1) actionnée par le conducteur et des composants de circuits de freins qui, en cas d'intervention automatique sur les freins, règlent des valeurs de pression prédéterminées dans les cylindres de freins de roue (12), indépendamment de l'action sur la pédale de frein (1),
**caractérisée en ce que**
l'unité de régulation de vitesse (14) en fonctionnement est coupée au début (t₀) de l'actionnement de la pédale de frein (1) et, ensuite, l'intervention automatique sur les freins se fait de façon à conserver la dernière pression réelle (P_{Sréel}) réglée dans les cylindres de freins de roue (12) par l'unité de régulation de vitesse (14), jusqu'à ce que la pression de consigne (P_{F}) demandée par l'actionnement de la pédale de frein (1) atteint ou dépasse la pression réelle (P_{S}) réglée en dernier lieu dans les cylindres de freins de roue (12) par l'unité de régulation de vitesse (14).

2. Installation de régulation de freins pour véhicule, comprenant une unité de régulation de vitesse électronique (14) susceptible d'être mise en oeuvre et d'être coupée, qui règle une vitesse prédéterminée du véhicule par une intervention automatique sur les freins, une pédale de frein (1) actionnée par le conducteur et des composants de circuits de freins qui, en cas d'intervention automatique sur les freins, règlent des valeurs de pression prédéterminées dans les cylindres de freins de roue (12), indépendamment de l'action sur la pédale de frein (1),
**caractérisée en ce que**
l'unité de régulation de vitesse (14) en fonctionnement est coupée au début (t₀) de l'actionnement de la pédale de frein (1), et ensuite on effectue une intervention automatique sur les freins, de façon que la pression réelle (P_{S}) réglée dans les cylindres de freins de roue (12) partant de la pression réelle (P_{Sréel}) réglée en dernier lieu par l'unité de régulation de vitesse (14) dans les cylindres de freins de roue (12) se rapproche en continu de la pression de consigne (P_{F}) demandée par l'actionnement de la pédale de frein (1), jusqu'à ce que la pression réelle (P_{S}) réglée dans les cylindres de freins de roue (12) corresponde sensiblement à la pression de consigne (P_{F}) demandée par l'actionnement de la pédale de freins (1).

3. Installation de régulation de freins pour véhicule, comprenant une unité de régulation de vitesse électronique (14) susceptible d'être mise en oeuvre et d'être coupée, qui règle une vitesse prédéterminée du véhicule par une intervention automatique sur les freins, une pédale de frein (1) actionnée par le conducteur et des composants de circuits de freins qui, en cas d'intervention automatique sur les freins, règlent des valeurs de pression prédéterminées dans les cylindres de freins de roue (12), indépendamment de l'action sur la pédale de frein (1),
**caractérisée en ce que**
l'unité de régulation de vitesse (14) en fonctionnement est coupée au début (t₀) de l'actionnement de la pédale de frein (1), et ensuite on effectue une intervention automatique sur les freins, de façon que la pression réelle (P_{S}) réglée dans les cylindres de freins de roue (12) soit relevée à une valeur de pression globale (P_{Sréel} + P_{F}) correspondant à la somme de la pression réelle (P_{Sréel}) réglée en dernier lieu par l'unité de régulation de vitesse (14) dans les cylindres de freins de roue (12) et de la pression de consigne (P_{F}) demandée par l'actionnement de la pédale de frein (1).

4. Installation de régulation de freins selon la revendication 3,
**caractérisée en ce qu'**
après avoir atteint une valeur maximale définie de la pression globale (P_{Sréel} + P_{Fmax}), on effectue une intervention automatique sur les freins pour que cette valeur globale de la pression (P_{Sréel} + P_{Fmax}) dans les cylindres de freins de roue (12) soit abaissée à la pression de consigne (P_{F} ; (P_{Fmax}) demandée par l'actionnement de la pédale de frein (1).
